(19) Europäisches Patentamt
European Patent Office
Office européen des brevets

(11) **EP 4 415 289 A1**

(12) **EUROPEAN PATENT APPLICATION**

(43) Date of publication:
**14.08.2024 Bulletin 2024/33**

(21) Application number: **24155914.5**

(22) Date of filing: **06.02.2024**

(51) International Patent Classification (IPC):
*H04L 1/00* (2006.01)    *H04B 17/24* (2015.01)
*H04B 7/06* (2006.01)    *H04W 52/16* (2009.01)
*H04W 52/32* (2009.01)    *H04W 52/42* (2009.01)
*H04W 52/14* (2009.01)

(52) Cooperative Patent Classification (CPC):
**H04W 52/16; H04B 7/0602; H04B 17/24;
H04L 1/0091; H04W 52/143; H04W 52/325;
H04W 52/42**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **07.02.2023   US 202363443818 P
16.05.2023   US 202363466860 P
12.01.2024   US 202418411577**

(71) Applicant: **Samsung Electronics Co., Ltd.
Suwon-si, Gyeonggi-do 16677 (KR)**

(72) Inventors:
• **HU, Liang
San Jose, CA, 95134 (US)**
• **BAE, Jung Hyun
San Jose, CA, 95134 (US)**
• **SARTORI, Philippe Jean Marc Michel
San Jose, CA, 95134 (US)**

(74) Representative: **Kuhnen & Wacker
Patent- und Rechtsanwaltsbüro PartG mbB
Prinz-Ludwig-Straße 40A
85354 Freising (DE)**

(54) **ENHANCED BEAM MANAGEMENT FOR SPATIAL AND POWER DOMAIN ADAPTATION IN NETWORK ENERGY SAVINGS (NES)**

(57)    A system and a method are provided for enhanced beam management framework for spatial and power domain adaptation in NES. A method performed by a terminal in a wireless communication system includes receiving, from a base station, control information preconfiguring the terminal with a set of CSI-RS resources, wherein each CSI-RS resource in the set of CSI-RS resources is uniquely mapped to a powerControlOffsetSS value; receiving a set of CSI-RSs; performing measurements of each of the CSI-RSs of the set of CSI-RSs; and transmitting a CSI report including the measurements of each of the CSI-RSs of the set of CSI-RSs.

FIG. 8

**Description**

**TECHNICAL FIELD**

The disclosure generally relates to network energy savings (NES). More particularly, the subject matter disclosed herein relates to improvements to enhanced beam management framework for spatial and power domain adaptation in NES.

**SUMMARY**

In Rel-18, 3rd generation partnership project (3GPP) is standardizing NES, which includes the standardization of antennas and power adaptation.

When an antenna port-to-transceiver unit (TxRU) mapping is modified, e.g., due to TxRU(s) being powered off, the impact on a user equipment (UE) may be significant. In particular, channel state information (CSI) reporting, based on CSI-reference signal (RS) measurement may be affected by a new antenna port mapping. This can also affect radio link monitoring (RLM), radio resource management (RRM), and beam management procedures.

While existing signaling, to some extent, may be used to inform UEs of new CSI-RS configurations, the process is often cumbersome as it generally requires a large amount of signaling, is relatively slow, and is not appropriate for dynamic adaptation that allows for meaningful energy savings.

**Adaptation of Transmission Power of Signals and Channels**

As per the current 3GPP specification, a synchronization signal block (SSB) reference power *ss-PBCH-Block-Power* is defined in system information block 1 (SIB1). The *powerControlOffsetSS,* which is a power offset between a (non-zero power (NZP)) CSI-RS and an SSB, and *powerControlOffset,* which is a power offset of a physical downlink shared channel (PDSCH) and a (NZP) CSI-RS, are semi-statically configured via radio resource control (RRC) signaling. The power offset configurations for PDSCH and CSI-RS are bandwidth part (BWP)-specific. The current specification allows a base station, i.e., a gNB, to adapt the PDSCH transmission power.

The adaptation of transmission power of signals and channels aims at adapting the transmission power or power spectrum density (PSD) of downlink signals and channels dynamically by enhancing the related configuration to a UE (e.g., by considering power offsets that account for potential power adaptation) and/or enhancing UE feedback (e.g., a CSI report) to assist NES operations. These type of techniques may be applicable to one or more of a PDSCH, a CSI-RS, a demodulation reference signal (DMRS), broadcast channels/signals (e.g., SSB/SI/paging). Further, enhancements for updating the power offset values between various signals and channels, e.g., a CSI-RS to an SSB, or a PDSCH to a CSI-RS, may include using lower layer signaling.

**Adaptation of Spatial Elements**

According to conventional multiple input, multiple output (MIMO) procedures, the adaptation of spatial elements can be achieved by RRC (re-)configurations updates, such as CSI-RS (re-)configurations, in a semi-static manner. Moreover, the current framework allows a UE to be configured with multiple CSI-RS resources, where these CSI-RS configurations may be with respect to different numbers of spatial antenna ports or antenna elements.

For the CSI reports with respect to a different number of spatial elements being available, a gNB may be able to dynamically adjust the number of spatial elements for a PDSCH transmission in the current specification. CSI-RS and CSI reporting configurations are BWP-specific, and BWP adaptation framework can be utilized for the adaptation for a UE capable of multiple BWPs and dynamic BWP switching.

Indication for potential enhancements related to spatial element adaptation may help a UE to adapt an already configured CSI-RS configuration, such as dynamic/semi-persistent (SP) ON-OFF of a CSI-RS or to reconfigure the CSI-RS configuration, with respect to the adapted number of spatial elements/ports.

This type of technique aims to enhance dynamic adaptation of spatial elements, such as the number of active transceiver chains or the number of active antenna panels at a gNB in transmitting and/or receiving channels and signals.

**Mapping Between Ports and TxRU**

Typically, an antenna port is mapped to several TxRUs.

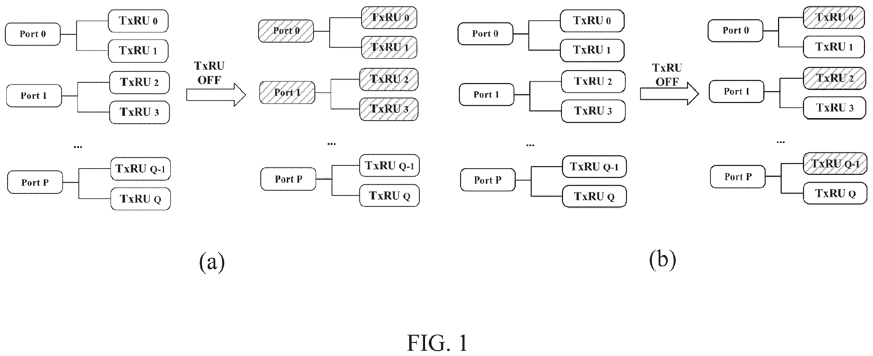

FIG. 1 illustrates examples of mapping of antenna ports and TxRUs.

Referring to FIG. 1, in (a), an antenna port is disabled and turned off on both TxRUs. In (b), the port is still present, but instead of being transmitted by 2 TxRUs, is now transmitted by a single TxRU.

Both example (a) and (b) are possible in practical scenarios and can be adopted depending on network implementation, e.g., according to traffic load in a cell, a gNB can switch off a set of antenna ports to reduce the power consumption while traffic requirements can still be satisfied.

In accordance with an aspect of the present disclosure, a method is provided for dynamically adapting a number of TxRUs and/or Tx power of a single port CSI-RS transmissions for beam management in an energy saving network.

When the number of TxRU or antenna port(s) is(are) reduced, corresponding power amplifiers (PAs) and antenna elements are turned off. However, while this may lead to transmission power reduction, it may also have an impact on reference signal transmission (e.g., a CSI-RS).

UEs perform several power-related measurements on a CSI-RS:

- layer 1 signal-to-interference-plus-noise ratio (L1-SINR)/L1-reference signals received power (RSRP) of CSI-RS for beam management and RLM.
- RSRP/reference signal received quality (RSRQ)/SINR on configured resources of CSI-RS for RRM and cell (re)selection as well as handover.

If the transmission power of a CSI-RS fluctuates dynamically due to dynamic TxRU adaptation, it may affect a UE's measurement for beam management, RLM, and RRM. It may also affect cell (re)selection and handover procedure. Therefore, there is a need for UEs to be aware of, and to deal with power changes on a CSI-RS when antenna ports/TxRU(s) are turned on/off.

In addition, TxRU(s) reduction may result in a CSI-RS transmission power reduction, which may eventually lead to false beam failure and/or radio link failure, as well as an unnecessary event-triggered measurement report, which increases signaling overhead for uplink reporting.

Considering the flexibility of CSI-RS transmission, it may be difficult to avoid TxRU adaptation operations on CSI-RS symbols. Thus, enhancements on beam management (e.g., beam failure detection (BFD) and beam failure recovery (BFR)), RLM, and RRM measurement based on CSI-RS are also needed.

Accordingly, the present disclosure provides various methods for improving beam management, including:

- Group-common signaling to inform UEs about a dynamic TxRU pattern of CSI-RS transmissions caused by TxRU adaptation.
- Adaptation of $Q_1$ and $Q_2$ thresholds for BFD and BFR according to new antenna port mapping.

Additionally, NES methods, like antenna port muting, power adaptation, beam adaptation, etc., are likely to change large-scale fading observed at the antenna ports, potentially impacting a transmission configuration indication (TCI) configuration, whereas the CSI-RS ports represent the observed small-scale fading. Accordingly, it is also likely that changes in a CSI-RS port configuration will require changes to associated TCI states.

Further, an NES operation can result in frequent CSI and TCI reconfigurations. However, an RRC reconfiguration is not appropriate due to energy consumption, overhead, and latency. Therefore, there is also a need for a dynamic TCI reconfiguration mechanism.

In accordance with an embodiment of the disclosure, a method of dynamic signaling using downlink control information (DCI) and/or a medium access control (MAC) control element (CE) is provided.

While it may be possible to configure a TCI state and its quasi co-location (QCL) relation with a CSI-RS and other RSs, which are subsequently required by a CSI-RS reconfiguration, mapping of TCI and CSI-RS ports are still required for an efficient NES operation. Thus, a need exists for specification changes to address enhanced beam indication of TCI state updates due to a change of a TxRU.

In an embodiment, a method performed by a terminal in a wireless communication system includes receiving, from a base station, control information preconfiguring the terminal with a set of CSI-RS resources, wherein each CSI-RS resource in the set of CSI-RS resources is uniquely mapped to a powerControlOffsetSS value; receiving a set of CSI-RSs; performing a measurement of each of the CSI-RSs of the set; and transmitting a CSI report including the measurements of each of the CSI-RSs in the set.

In an embodiment, a method performed by a base station in a wireless communication system includes transmitting control information preconfiguring a terminal with a set of CSI-RS resources, wherein each CSI-RS resource in the set of CSI-RS resources is uniquely mapped to a powerControlOffsetSS value; transmitting a set of CSI-RSs; and receiving, from the terminal, a CSI report including measurements of each of the CSI-RSs in the set. The terminal performs a measurement of each of the CSI-RSs of the set.

In an embodiment, a terminal is provided for use in a wireless communication system. The terminal includes a transceiver; and a processor configured to receive, from a base station, control information preconfiguring the terminal with a set of CSI-RS resources, wherein each CSI-RS resource in the set of CSI-RS resources is uniquely mapped to a powerControlOffsetSS value, receive a set of CSI-RSs, perform a measurement of each of the CSI-RSs of the set, and transmit a CSI report including the measurements of each of the CSI-RSs in the set.

In an embodiment, a base station for use in a wireless communication system. The base station includes a transceiver; and a processor configured to transmit control information preconfiguring a terminal with a set of CSI-RS resources, wherein each CSI-RS resource in the set of CSI-RS resources is uniquely mapped to a powerControlOffsetSS value, transmit a set of CSI-RSs, and receive, from the terminal, a CSI report including measurements of each of the CSI-RSs in the set. The terminal performs a measurement of each of the CSI-RSs of the set.

**BRIEF DESCRIPTION OF THE DRAWING**

In the following section, the aspects of the subject matter disclosed herein will be described with reference to exemplary embodiments illustrated in the figures, in which:

FIG. 1 illustrates examples of mapping of antenna ports and TxRUs;
FIG. 2 is a signal flow diagram illustrating a CSI report operation according to an embodiment;
FIG. 3 is a timeline of a CSI report operation according to an embodiment;
FIG. 4 illustrates an SP CSI-RS/CSI-interference measurement (IM) Resource Set Activation/Deactivation MAC CE according to an embodiment;
FIG. 5 is a signal flow diagram illustrating a beam indication operation according to an embodiment;
FIG. 6 is a flow chart illustrating a method performed by a terminal according to an embodiment;
FIG. 7 is a flow chart illustrating a method performed by a base station according to an embodiment;
FIG. 8 is a flow chart illustrating a method performed by a terminal according to an embodiment;
FIG. 9 is a flow chart illustrating a method performed by a base station according to an embodiment;
FIG. 10 is a block diagram of an electronic device in a network environment, according to an embodiment; and
FIG. 11 shows a system including a UE and a gNB in communication with each other.

**DETAILED DESCRIPTION**

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

**Enhanced Downlink Beam Refinement with Dynamic TxRU and Tx Power**

In accordance with an embodiment of the disclosure, a method is provided for dynamic CSI-RS measurement reconfiguration when a TxRU changes (i.e., a Tx power per antenna port changes), which includes:

1. Receiving a set of possible TxRU patterns and/or a set of Tx powers per antenna port for each CSI-RS; and
2. Using DCI or a MAC CE to indicate a specific TxRU pattern and/or a set of Tx power per antenna port for a one or two-port CSI-RS for downlink beam refinement. With the current standards, such a signaling of the TxRUs is not possible.

Indication of the set of possible TxRU patterns and/or Tx power per antenna port

A set of possible TxRU patterns may be RRC pre-configured to UEs using CSI-RS-ResourceMapping. In accordance with an embodiment of the disclosure, an updated RRC information element (IE) is provided, which includes a set of possible TxRU patterns or a set of possible Tx power offsets (i.e., a power domain technique) as part of the CSI-RS resource mapping. An example of the updated RRC IE is provided below in Table 1, wherein the new information therein is bolded and italicized.

Table 1

```
NZP-CSI-RS-ResourceSet -> NZP-CSI-RS-Resource -> CSI-RS-ResourceMapping

NZP-CSI-RS-ResourceSet ::= SEQUENCE {
 nzp-CSI-ResourceSetId NZP-CSI-RS-ResourceSetId,
 nzp-CSI-RS-Resources SEQUENCE (SIZE (1..maxNrofNZP-CSI-RS-ResourcesPerSet))
 OF NZP-CSI-RS-ResourceId,
 repetition ENUMERATED { on, off } OPTIONAL,
 aperiodicTriggeringOffset INTEGER(0..4) OPTIONAL,
 trs-Info ENUMERATED {true} OPTIONAL,

 ...
 }

NZP-CSI-RS-Resource ::= SEQUENCE {
 nzp-CSI-RS-ResourceId NZP-CSI-RS-ResourceId,
 resourceMapping CSI-RS-ResourceMapping,
 powerControlOffset INTEGER (-8..15),

 powerControlOffsetSS ENUMERATED {TxP1,TxP2,TxP4,TxP8,TxP16},
 scramblingID ScramblingId,
 periodicityAndOffset CSI-ResourcePeriodicityAndOffset OPTIONAL,-
 qcl-InfoPeriodicCSI-RS TCI-StateId OPTIONAL, -- Cond Periodic

 ...
 }


CSI-RS-ResourceMapping ::= SEQUENCE {
 frequencyDomainAllocation CHOICE {
 row1 BIT STRING (SIZE (4)),
 row2 BIT STRING (SIZE (12)),
```

```
row4 BIT STRING (SIZE (3)),
other BIT STRING (SIZE (6))
},
nrofPorts ENUMERATED {p1,p2,p4,p8,p12,p16,p24,p32},
nrofTxRUs ENUMERATED {T1,T2,T4,T8,T16},

firstOFDMSymbolInTimeDomain INTEGER (0..13),
firstOFDMSymbolInTimeDomain2 INTEGER (2..12) OPTIONAL, -- Need R
cdm-Type ENUMERATED {noCDM, fd-CDM2, cdm4-FD2-TD2, cdm8-FD2-TD4},
density CHOICE {
dot5 ENUMERATED {evenPRBs, oddPRBs},
one NULL,
three NULL,
spare NULL
},
freqBand CSI-FrequencyOccupation,
...
}
-
```

As indicated above, DCI or a MAC CE may be used activate a Tx power (powerControlOffsetSS) for a CSI-RS or multiple CSI-RSs for downlink beam refinement. This information may be sent to a UE as part of an aperiodic (AP) CSI-RS configuration to the UE, or as additional updates to an existing periodic (P) CSI-RS configuration.

For example, a UE may be configured with NZP-CSI-RS-ResourceSet = { CSI-RS_1, CSI-RS_2... CSI-RS_32}, where each of these CSI-RSs is a one or two-port CSI-RS for CSI-RS resource index (CRI)-RSRP measurement.

DCI or a MAC CE can also dynamically indicate a Tx power (powerControlOffsetSS) employed for all of these CSI-RSs to a UE, such that the UE can measure and report the corresponding CSI-RSs with the actual employed Tx power (powerControlOffsetSS).

DCI or a MAC CE may include an indicated CSI-RS ID, and an indicated powerControlOffsetSS for the indicated CSI-RS identifier (ID).

When a powerControlOffsetSS configuration is sent by DCI, group DCI can be used. By default, a group may be created with all the UEs capable of utilizing sidelink control information (SCI).

A group radio network temporary identifier (RNTI) may be indicated by RRC, dedicated or common. Thereafter, a group DCI, e.g., DCI 2_0, may be sent to indicate the configuration to a group of UEs to save the signaling overhead.

As an alternative to an explicit indication of a powerControlOffsetSS, an implicit method may include pre-configuring a UE with a set of CSI-RS resources, where each CSI-RS resource is uniquely mapped to a powerControlOffsetSS. For example, using CSI-RS1 and CSI-RS2, CSI-RS 1 may correspond to a first TxRU and Tx power configuration, CSI-RS2 may correspond to a second TxRU and Tx power configuration, etc. In operation, the UE blindly attempts to decode CSI-RS1 and CSI-RS2. When the UE receives a CSI-RS from a gNB, the received CSI-RS may implicitly indicate the TxRU and Tx power configuration to be used. This type of implicit method may not even require the use of different CSI-RS resources, e.g., changing the spreading factor only may be sufficient.

For example, a UE first receives a pre-configuration through RRC signaling. Assuming two TxRUs, the pre-configuration may include:

- CSI-RS1 indicates TxRU1 on full power, TxRU2 off
- CSI-RS2 indicates TxRU1 off, TxRU2 on full power
- CSI-RS3 indicates TxRU1 on, TxRU2 on, both at Pmax-3 dB power

Thereafter, when the UE attempts to decode a CSI-RS, it blindly attempts to decode CSI-RS1, CSI-RS2, and CSI-RS3. Depending on which CSI-RS it discovers, the UE then knows the powerControlOffsetSS value.

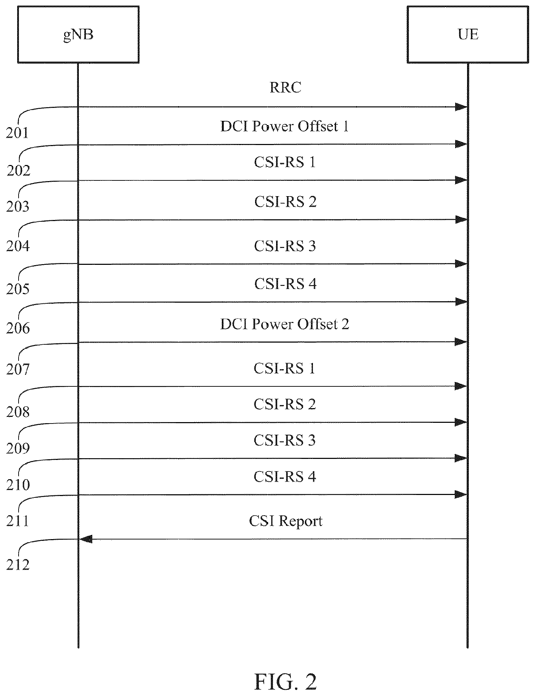

FIG. 2 is a signal flow diagram illustrating a CSI report operation according to an embodiment.

Referring to FIG. 2, in step 201, a gNB transmits, to a UE, an RRC indicating a set of possible TxRU patterns and/or a set of Tx powers per antenna port for each CSI-RS. For example, an RRC IE as shown in Table 1 may be used.

In step 202, the gNB transmits DCI, i.e., DCI power offset 1, (or a MAC CE) to indicate a specific TxRU pattern and/or Tx power per antenna port for a one or two-port CSI-RS, from among the set of possible TxRU patterns and/or the set of Tx powers per antenna port for each CSI-RS in the RRC.

In steps 203 to 206, the gNB transmits CSI-RS 1, CSI-RS 2, CSI-RS 3, and CSI-RS 4, respectively.

In step 207, the gNB transmits another DCI, i.e., DCI power offset 2, (or a MAC CE) to indicate another specific TxRU pattern and/or another set of Tx power per antenna port for a one or two-port CSI-RS, from among the set of possible TxRU patterns and/or the set of Tx powers per antenna port for each CSI-RS in the RRC.

In steps 208 to 211, the gNB transmits CSI-RS 1, CSI-RS 2, CSI-RS 3, and CSI-RS 4, respectively.

In step 212, the UE transmits, to the gNB, a CSI report based on the received CSI-RSs.

In the CSI report, a CRI-RSRP report can be optionally enhanced by including an additional index of the TxRU pattern employed for the one port CSI-RS, and/or an index of a Tx power offset between a CSI-RS to an SSB signal.

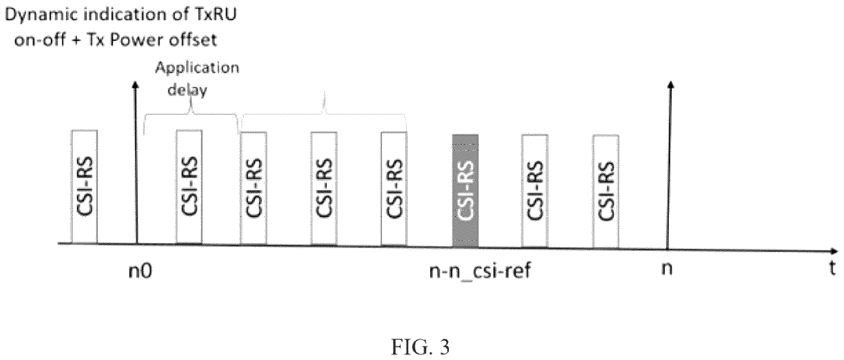

FIG. 3 is a timeline of a CSI report operation according to an embodiment.

Referring to FIG. 3, for a P CSI-RS with dynamic TxRU adaptation or Tx power adaptation, when timeRestrictionForChannelMeasurements for CSI-RS measurement is set to "notConfigured", a UE derives channel measurements for computing a CSI value reported in an uplink slot n based on multiple CSI-RS resources, no later than a CSI reference resource. When a gNB indicates to a UE that some TxRUs are turned off or a dynamic changed Tx power offset value at slot *n0,* due to the UE's processing time delay, the UE may not actually identify the power changing of the CSI-RS resource before receiving another CSI-RS after slot *n0*. As such, the UE may still derive the CSI value by averaging the CSI-RS measurements before and after slot *n0,* and the CSI value will not be correct. Thus, according to an embodiment, enhancements are provided for a UE to jointly measure CSI-RSs transmitted before and after dynamic adaptation of TxRUs or Tx power offset value changes.

More specifically, via DCI, a gNB can indicate, to the UE, a new Tx power offset value applied to the CSI-RS transmissions, based on the application time delay of the UE, i.e., the time gap between *n0* and when the UE finishes decoding the new Tx power offset from the gNB. As a result, the UE may correctly measure a CSI-RS transmitted during the application time delay gap with the newly indicated Tx power offset.

**Enhanced BFD and BFR Procedure**

According to an embodiment of the disclosure, conventional RLM, BFD and BFR procedures can be enhanced for dynamic TxRU and Tx power adaptation at a gNB, when the gNB maintains constant PDSCH power and only changes CSI-RS Tx power.

In this case, to maintain the same Tx power of a PDSCH, the legacy *powerControlOffset* values may be updated to accommodate the Tx power change of the CSI-RS. In particular, the improved power control offset may be provided using Equation (1).

$$\text{powerControlOffset (new)} = powerControlOffset\ (old) + powerControlOffsetSS\ (new) - powerControlOffsetSS\ (old)$$

$$\dots (1)$$

Additionally, an RRC message IE RadioLinkMonitoringConfig can be enhanced as shown below, wherein the new information therein is bolded and italicized.

The IE RadioLinkMonitoringConfig is used to configure radio link monitoring for detection of beam and/or cell radio link failure.

## Table 2 - RadioLinkMonitoringConfig information element

```
-- ASN1START
-- TAG-RADIOLINKMONITORINGCONFIG-START

RadioLinkMonitoringConfig ::= SEQUENCE {
 failureDetectionResourcesToAddModList SEQUENCE (SIZE(1..maxNrofFailureDetectionResources))
OF RadioLinkMonitoringRS
   OPTIONAL, -- Need N
 failureDetectionResourcesToReleaseList SEQUENCE
(SIZE(1..maxNrofFailureDetectionResources)) OF RadioLinkMonitoringRS-Id
   OPTIONAL, -- Need N
 beamFailureInstanceMaxCount ENUMERATED {n1, n2, n3, n4, n5, n6, n8, n10} OPTIONAL, -- Need
R
 beamFailureDetectionTimer ENUMERATED {pbfd1, pbfd2, pbfd3, pbfd4, pbfd5, pbfd6, pbfd8,
pbfd10} OPTIONAL, -- Need R
 ...,
 [[
 beamfailure-r17 BeamFailureDetection-r17 OPTIONAL -- Need R
 ]]
}

BeamFailureDetection-r17 ::= SEQUENCE {
 failureDetectionSet1-r17 BeamFailureDetectionSet-r17 OPTIONAL, -- Need R
 failureDetectionSet2-r17 BeamFailureDetectionSet-r17 OPTIONAL, -- Need R
 additionalPCI-r17 AdditionalPCIIndex-r17 OPTIONAL -- Need R
}

RadioLinkMonitoringRS ::= SEQUENCE {
 radioLinkMonitoringRS-Id RadioLinkMonitoringRS-Id,
 purpose ENUMERATED {beamFailure, rlf, both},
 detectionResource CHOICE {
 ssb-Index SSB-Index,
 csi-RS-Index NZP-CSI-RS-ResourceId
 },
 ...
}

BeamFailureDetectionSet-r17 ::= SEQUENCE {
 bfdRescurcesToAddModList-r17 SEQUENCE (SIZE(1..maxNrofBFDResourcePerSet-r17}) OF
BeamLinkMonitoringRS-r17
   OPTIONAL, -- Need N
 bfdRescurcesToReleaseList-r17 SEQUENCE (SIZE(1..maxNrofBFDResourcePerSet-r17)) OF
BeamLinkMonitoringRS-Id-r17
   OPTIONAL, -- Need N
 beamFailureInstanceMaxCount-r17 ENUMERATED {n1, n2, n3, n4, n5, n6, n8, n10} OPTIONAL, --
Need R
 beamFailureDetectionTimer-r17 ENUMERATED {pbfd1, pbfd2, pbfd3, pbfd4, pbfd5, pbfd6, pbfd8,
pbfd10} OPTIONAL, -- Need R
 ...
}

BeamLinkMonitoringRS-r17 ::= SEQUENCE {
 beamLinkMonitoringRS-Id-r17 BeamLinkMonitoringRS-Id-r17,
 detectionResource-r17 CHOICE {
 ssb-Index SSB-Index,
 csi-RS-Index NZP-CSI-RS-ResourceId
 nrofTxRUs ENUMERATED {T1,T2,T4,T8,T16},
 nrofTxPowers ENUMERATED {TxP1,TxP2,TxP4,TxP8,TxP16},

 },
 ...
}

BeamLinkMonitoringRS-Id-r17 ::= INTEGER (0..maxNrofFailureDetectionResources-1-r17)

-- TAG-RADIOLINKMONITORINGCONFIG-STOP
-- ASN1STOP
```

In particular, when a UE measures and evaluates the q_0 or q_0_0/q_0_1 set of periodical CSI-RSs for BFD, a gNB can dynamic indicate a powerControlOffsetSS of a CSI-RS out of the RRC pre-configure possible values in an NZP-CSI-RS-Resource IE, via DCI or a MAC CE. to the UE.

In addition, a UE is also RRC pre-configured with a set of threshold values to BFD instances, in addition to the conventional threshold value of $Q_{out,LR}$, where each of the threshold values corresponds to a configuration of powerControlOffsetSS values TxP_i. For example, a set values as shown in Table 3 below.

Table 3

| Configuration of powerControlOffsetSS power values | BFD Threshold |
|---|---|
| (TxP1) | $Q_{out,LR\_1}$ |
| (TxP2) | $Q_{out,LR\_2}$ |
| (TxP3) | $Q_{out,LR\_3}$ |
| (TxP4) | $Q_{out,LR\_4}$ |

A UE can determine which BFD threshold value to use based on an explicitly indicated TxRU and Tx power (powerControlOffsetSS) configuration from a gNB.

Alternatively, a powerControlOffsetSS can be acknowledged directly to the legacy Q_out, instead of separately configuring each separately. That is, a powerControlOffsetSS can be directly mapped to a legacy Q_out value. For example, if a legacy value was -100dBm, then the value of powerControlOffsetSS will implicitly be 97 with -3dB offset, and 94 with -6dB offset.

In this case, $Q_{out,LR}$ (new) = $Q_{out,LR}$ (old) + powerControlOffsetSS (new) - powerControlOffsetS S(old).

Similarly, an IE BeamFailureRecoveryConfig can be enhanced to consider dynamic TxRU and Tx power adaptation.

An IE BeamFailureRecoveryConfig may be used to configure a UE with random access channel (RACH) resources and candidate beams for BFR in case of BFD. Similar to BFD, a gNB can dynamically indicate, to a UE, an employed TxRU and Tx power of a transmitted CSI-RS.

In addition, a UE may be RRC pre-configured with a set of threshold values to BFR, in addition to a legacy threshold value of $Q_{in,LR}$, where each of the threshold values corresponds to a configuration of combination of TxRU and Tx power values (T_i, TxP_i). For instance, a set values is shown in Table 4 below.

Table 4

| Configuration of TxRU & Tx power values | BFR Threshold |
|---|---|
| (T1, TxP1) | $Q_{in,LR\_1\_1}$ |
| (T2, TxP2) | $Q_{in,LR\_2\_2}$ |
| (T3, TxP3) | $Q_{in,LR\_3\_3}$ |
| (T4, TxP4) | $Q_{in,LR\_4\_4}$ |

A UE can determine which BFR threshold value to use based on the explicitly indicated TxRU and Tx power configuration of the transmitted CSI-RSs of the set q_1 or q_1_0/q_1_1 CSI-RSs from the gNB.

For RLM, the same CSI reference signal of BFR with dynamic TxRU and Tx power adaptation can be used.

**Enhanced TCI Framework with TxRU Adaptation and Tx Power Adaptation**

As Type 1 or Type 2 spatial domain adaptation will also dynamically impact a beam pattern, there will also be an impact on a TCI state.

More specifically, Type 2 spatial domain adaptation may alter beam-width, which may impact a channel delay spread, which may invalidate previous QCL-TypeA relationships. Additionally, a spatial Rx filter may change as a subset of active spatial elements varies per Type 1 or Type 2 spatial domain adaptation, which may invalidate previous QCL-TypeD relationships.

With Type 1 or 2 spatial domain adaptation, as a UE may be configured with multiple CSI-RS resource sub-configurations with multiple parameters, such as resourceMapping, powerControlOffsetSS, and powerControlOffset for different hypotheses, an additional level of TCI state indication may be introduced to signal a CSI-RS resource sub-configuration index for a given CSI-RS resource configuration along with an existing indication of CSI-RS resource index.

According to an embodiment, an existing DCI (and/or MAC-CE) format can be extended with a new field for indicating CSI-RS resource sub-configuration index. In particular, the CSI-RS resource sub-configuration index can be represented by an individual parameter "resourceMapping" for Type 1 spatial domain adaptation, "powerControlOffset-SS" for Type 2 spatial domain adaptation, or a combination of them.

For Type 1 spatial domain adaptation, an enhanced definition of a TCI state is provided by adding parameters to TCI-State as shown in Table 5, wherein the new information therein is bolded and italicized.

Table 5

```
TCI-State ::= SEQUENCE {
tci-StateId TCI-StateId,
qcl-Type1 QCL-Info,
    qcl-Type2 QCL-Info
CSI-RS-resourceMapping ENUMERATED {TxP1,TxP2,TxP4,TxP8,TxP16},


OPTIONAL, -- Need R
...
}
```

Alternatively, an enhanced definition of a TCI state be provided as shown in Table 6, wherein the new information therein is bolded and italicized.

Table 6

```
{
tci-StateId n,
qcl-Type1
{
bwp-Id b,
referenceSignal csi-rs : k
qcl-Type typeA
CSI-RS-resourceMapping ENUMERATED {TxP1,TxP2,TxP4,TxP8,TxP16},
}
}
```

For Type 2 spatial domain adaptation, an enhanced definition of a TCI state is provided by adding parameters to TCI-State as shown in Table 7, wherein the new information therein is bolded and italicized:

Table 7

```
TCI-State ::= SEQUENCE {
tci-StateId TCI-StateId,
qcl-Type1 QCL-Info,
      qcl-Type2 QCL-Info
nrofTxRUs ENUMERATED {T1,T2,T4,T8,T16},
nrofTxPowers ENUMERATED {TxP1,TxP2,TxP4,TxP8,TxP16},


OPTIONAL, -- Need R
...
```

```
}
```

Alternatively, an enhanced definition of a TCI state may be provided as shown in Table 8, wherein the new information therein is bolded and italicized:

Table 8

```
{
tci-StateId n,
qcl-Type1
{
bwp-Id b,
referenceSignal csi-rs : k
qcl-Type typeA
nrofTxRUs ENUMERATED {T1,T2,T4,T8,T16},
nrofTxPowers ENUMERATED {TxP1,TxP2,TxP4,TxP8,TxP16},


}
}
```

For a P CSI-RS, the impact of the parameter of number of TxRU and/or nrofTxPowers and/or CSI-RS-resourceMapping per CSI-RS can be found inside the IE powerControlOffsetSS and the IE resourceMapping or nrofPorts of NZP-CSI-RS-Resource.

For an AP CSI-RS, the impact of the parameter of number of TxRU and or nrofTxPowers and or resourceMapping per CSI-RS can be found inside the TCI-stateId IE of CSI-AperiodicTriggerStateList IE as shown in Table 9 below, wherein the new information therein is bolded and italicized.

## Table 9

```
-- ASN1START
-- TAG-CSI-APERIODICTRIGGERSTATELIST-START

CSI-AperiodicTriggerStateList ::= SEQUENCE (SIZE (1..maxNrOfCSI-AperiodicTriggers)) OF CSI-
AperiodicTriggerState

CSI-AperiodicTriggerState ::= SEQUENCE {
 associatedReportConfigInfoList SEQUENCE (SIZE(1..maxNrofReportConfigPerAperiodicTrigger))
OF CSI-AssociatedReportConfigInfo,
 ...,
 [[
 ap-CSI-MultiplexingMode-r17 ENUMERATED {enabled} OPTIONAL -- Need R
 ]]
}

CSI-AssociatedReportConfigInfo ::= SEQUENCE {
 reportConfigId CSI-ReportConfigId,
 resourcesForChannel CHOICE {
 nzp-CSI-RS SEQUENCE {
 resourceSet INTEGER (1..maxNrofNZP-CSI-RS-ResourceSetsPerConfig),
 qcl-info SEQUENCE (SIZE(1..maxNrofAP-CSI-RS-ResourcesPerSet)) OF TCI-StateId
  OPTIONAL -- Cond Aperiodic
 },
 csi-SSB-ResourceSet INTEGER (1..maxNrofCSI-SSB-ResourceSetsPerConfig)
 },
 csi-IM-ResourcesForInterference INTEGER(1..maxNrofCSI-IM-ResourceSetsPerConfig) OPTIONAL,
-- Cond CSI-IM-ForInterference
 nzp-CSI-RS-ResourcesForInterference INTEGER (1..maxNrofNZP-CSI-RS-ResourceSetsPerConfig)
OPTIONAL, -- Cond NZP-CSI-RS-ForInterference
 ...,
 [[
 resourcesForChannel2-r17 CHOICE {
 nzp-CSI-RS2-r17 SEQUENCE {
 resourceSet2-r17 INTEGER (1..maxNrofNZP-CSI-RS-ResourceSetsPerConfig),
 qcl-info2-r17 SEQUENCE (SIZE(1..maxNrofAP-CSI-RS-ResourcesPerSet)) OF TCI-StateId
  OPTIONAL -- Cond Aperiodic
 },
 csi-SSB-ResourceSet2-r17 INTEGER (1..maxNrofCSI-SSB-ResourceSetsPerConfigExt)
 } OPTIONAL, -- Cond NoUnifiedTCI
 csi-SSB-ResourceSetExt INTEGER (1..maxNrofCSI-SSB-ResourceSetsPerConfigExt) OPTIONAL --
Need R
 ]]
}

-- TAG-CSI-APERIODICTRIGGERSTATELIST-STOP
-- ASN1STOP
```

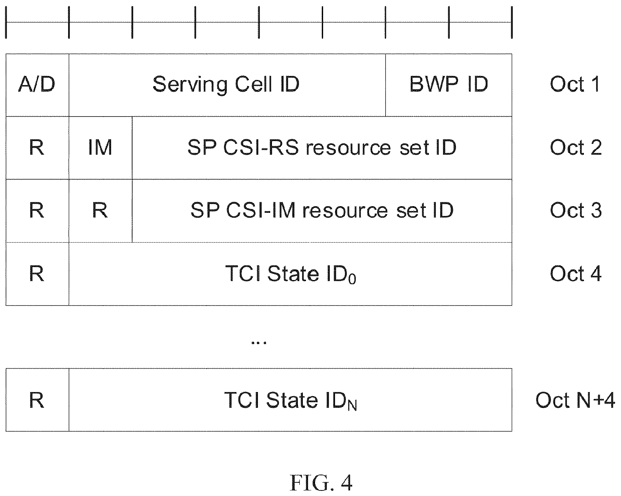

FIG. 4 illustrates an SP CSI-RS/CSI-interference measurement (IM) Resource Set Activation/Deactivation MAC CE according to an embodiment.

Referring to FIG. 4, for an SP CSI-RS, the impact of the parameter of number of TxRU and or nrofTxPowers and or resourceMapping per CSI-RS can be found inside the TCI-stateId field of the SP CSI-RS/CSI-IM Resource Set Activation/Deactivation MAC CE, which is identified by a MAC subheader with a logical channel ID (LCID). The SP CSI-RS/CSI-IM Resource Set Activation/Deactivation MAC CE may have a variable size and may include the following fields:

- Activate/Deactivate (A/D): This field indicates whether to activate or deactivate indicated SP CSI-RS and CSI-IM resource set(s). For example, the field is set to 1 to indicate activation, and otherwise, it indicates deactivation.
- Serving Cell ID: This field indicates the identity of a Serving Cell for which the MAC CE applies. The length of the field may be 5 bits.
- BWP ID: This field indicates a downlink BWP for which the MAC CE applies as a codepoint of a DCI BWP indicator field as specified in TS 38.212. The length of the BWP ID field may be 2 bits.
- SP CSI-RS resource set ID: This field contains an index of an NZP-CSI-RS-ResourceSet containing SP NZP CSI-RS resources, as specified in TS 38.331, indicating an SP NZP CSI-RS resource set, which shall be activated or deactivated. The length of the field may be 6 bits.

- IM: This field indicates the presence of the octet containing SP CSI-IM resource set ID field. If the IM field is set to 1, the octet containing SP CSI-IM resource set ID field is present. If IM field is set to 0, the octet containing SP CSI-IM resource set ID field is not present.
- SP CSI-IM resource set ID: This field contains an index of CSI-IM-ResourceSet containing SP CSI-IM resources, as specified in TS 38.331, indicating the SP CSI-IM resource set, which shall be activated or deactivated. The length of the field may be 6 bits.
- TCI State IDi: This field contains TCI-StateId, as specified in TS 38.331, of a TCI State, which is used as QCL source for the resource within the SP NZP CSI-RS resource set indicated by the SP CSI-RS resource set ID field. TCI State ID0 indicates TCI State for the first resource within the set, TCI State ID1 for the second one, etc. The length of the field may be 7 bits. If the A/D field is set to 0, the octets containing TCI State ID field(s) are not present.
- reserved (R): Reserved bit, set to 0.

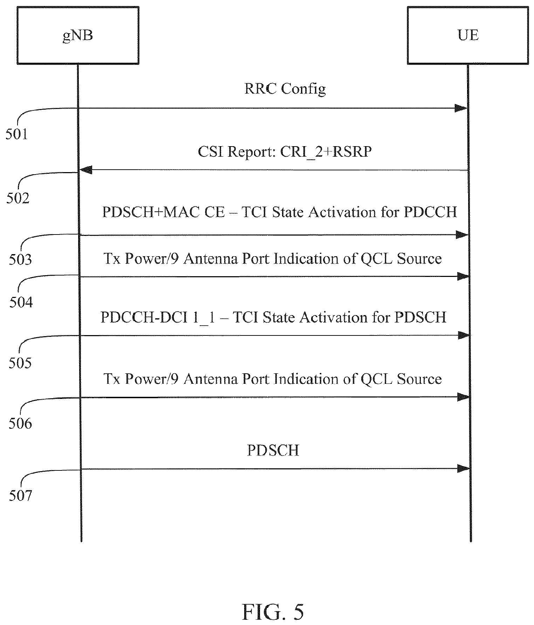

FIG. 5 is a signal flow diagram illustrating a beam indication operation according to an embodiment.

Referring to FIG. 5, a CRI-RSRP report for beam switching (e.g., during UE intra-cell mobility) can be enhanced by including a dynamic indication of a powerControlOffsetSS employed for the one port CSI-RS using a QCL source of a TCI state, or by including a dynamic indication of a number of ports or resourceMapping per CSI-RS using a QCL source of a TCI state.

Accordingly, a MAC CE and DCI to activate a TCI state for a PDCCH and a PDSCH may include a dynamic indication of a powerControlOffsetSS employed for a CSI-RS as a QCL source signal of a TCI state, or a dynamic indication of a number of antenna ports or resourceMapping per CSI-RS as a QCL source of a TCI state.

In step 501, a gNB transmits, to a UE, an RRC configuration of all TCI states.

In step 502, the UE transmits a CSI report to the gNB, after receiving CSI-RSs.

In step 503, the gNB transmits, to the UE, a PDSCH MAC CE including a TCI state activation for a PDCCH.

In step 504, the gNB transmits, to the UE, a Tx power/# of antenna port indication using a QCL source.

In step 505, the gNB transmits, to the UE, a PDCCH-DCI 1_1 including a TCI state activation for a PDSCH.

In step 506, the gNB transmits, to the UE, a Tx power/# of antenna port indication using a QCL source.

In step 507, the gNB transmits, to the UE, a PDSCH.

When dynamic adaptation of TxRU/antenna port or resourceMapping/Tx power changes the CSI-RS as a QCL source signal, if a UE has received a dynamic indication, e.g., as illustrated in FIG. 5, but not has yet received the CSI-RS, there is an application delay during which the UE applies the change to PDSCH or PDCCH reception. In particular, applicability of dynamic CSI-RS adaptation using a QCL source to a PDSCH or PDCCH may have extra delay or application time of $T\_min$ to provide enough time for the UE to process the corresponding CSI-RS before receiving the PDCCH or PDSCH. The value of $T\_min$ can be RRC configured to the UE or can be dynamically indicated to the UE, via DCI, from gNB, together with the dynamic indication of Tx power and/or # antenna port or resourceMapping of the CSI-RS.

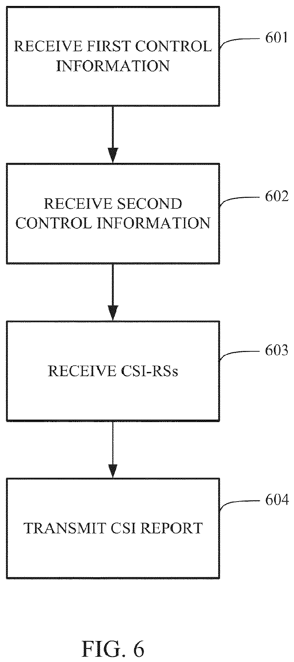

FIG. 6 is a flow chart illustrating a method performed by a terminal according to an embodiment.

Referring to FIG. 6, in step 601, the terminal, e.g., a UE, receives first control information including at least one of a set of possible TxRU patterns or a set of possible Tx powers per antenna port for CSI-RSs, e.g., RRC IE is provided in Table 1 above.

In step 602, the terminal receives second control information, e.g., DCI or a MAC CE, for identifying at least one of a specific TxRU pattern or a specific Tx power per antenna port for a one or two-port CSI-RS, from among the at least one of the set of possible TxRU patterns or the set of possible Tx powers per antenna port in the first control information.

In step 603, the terminal receives the CSI-RSs based on the first and second control information.

In step 604, the terminal transmits a CSI report based on the received CSI-RSs

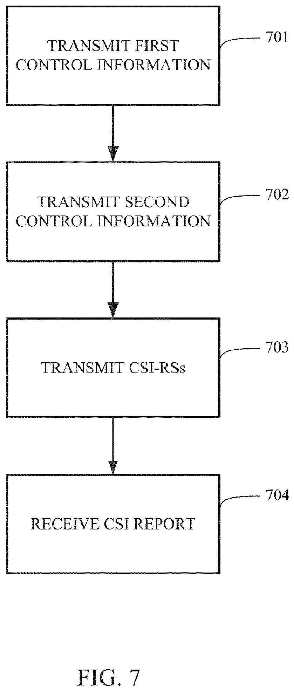

FIG. 7 is a flow chart illustrating a method performed by a base station according to an embodiment.

Referring to FIG. 7, in step 701, the base station, e.g., a gNB, transmits first control information including at least one of a set of possible TxRU patterns or a set of possible Tx powers per antenna port for CSI-RSs, e.g., RRC IE is provided in Table 1 above.

In step 702, the base station transmits second control information, e.g., DCI or a MAC CE, for identifying at least one of a specific TxRU pattern or a specific Tx power per antenna port for a one or two-port CSI-RS, from among the at least one of the set of possible TxRU patterns or the set of possible Tx powers per antenna port in the first control information.

In step 703, the base station transmits the CSI-RSs based on the first and second control information.

In step 704, the base station receives a CSI report based on the received CSI-RSs.

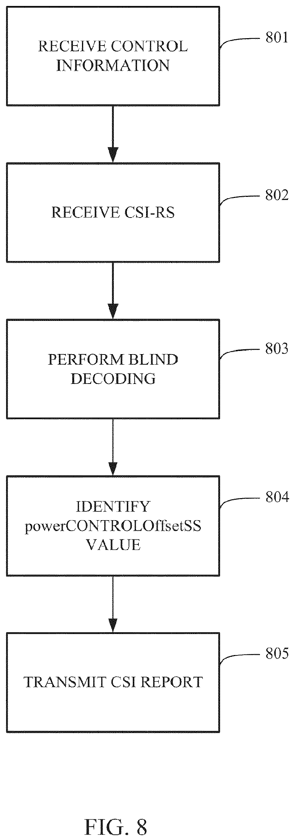

FIG. 8 is a flow chart illustrating a method performed by a terminal according to an embodiment.

Referring to FIG. 8, the terminal, in step 801, receives, from a base station, control information preconfiguring the terminal with a set of CSI-RS resources, wherein each CSI-RS resource in the set of CSI-RS resources is uniquely mapped to a powerControlOffsetSS value. As described above, an implicit method may include pre-configuring a UE with a set of CSI-RS resources, where each CSI-RS resource is uniquely mapped to a powerControlOffsetSS. For example, using CSI-RS 1 and CSI-RS2, CSI-RS 1 may correspond to a first TxRU and Tx power configuration, CSI-RS2 may correspond to a second TxRU and Tx power configuration, etc.

In step 802, the terminal receives a CSI-RS.

In step 803, the terminal performs blind decoding to identify the received CSI-RS based on the set of CSI-RS resources, and in step 804, identifies a powerControlOffsetSS value of the identified CSI-RS, based on the control information.

For example, the UE blindly attempts to decode CSI-RS 1 and CSI-RS2. When the UE receives a CSI-RS from a gNB, the received CSI-RS may implicitly indicate the TxRU and Tx power configuration to be used.

In step 805, the terminal transmits a CSI report based on the received CSI-RS.

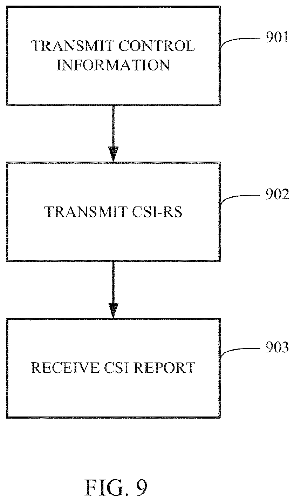

FIG. 9 is a flow chart illustrating a method performed by a base station according to an embodiment.

Referring to FIG. 9, in step 901, the base station transmits control information preconfiguring a terminal with a set of CSI-RS resources, wherein each CSI-RS resource in the set of CSI-RS resources is uniquely mapped to a powerControlOffsetSS value.

In step 902, the base station transmits a CSI-RS.

In step 903, the base station, receives, from the terminal, a CSI report based on the transmitted CSI-RS.

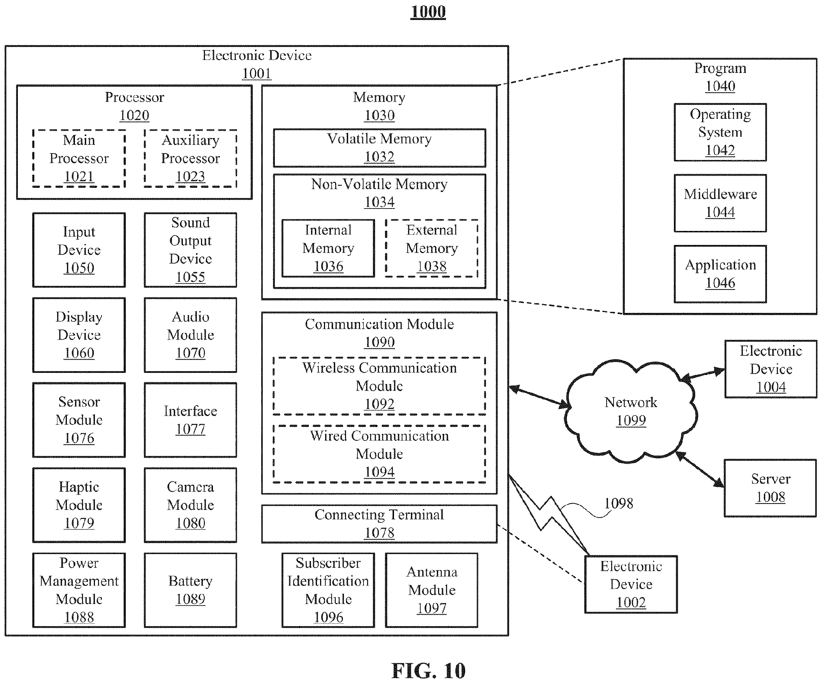

FIG. 10 is a block diagram of an electronic device in a network environment 800, according to an embodiment.

Referring to FIG. 10, an electronic device 1001, e.g., a UE as illustrated in FIG. 2, in a network environment 1000 may communicate with an electronic device 1002 via a first network 1098 (e.g., a short-range wireless communication network), or an electronic device 1004 or a server 1008 via a second network 1099 (e.g., a long-range wireless communication network). The electronic device 1001 may communicate with the electronic device 1004 via the server 1008. The electronic device 1001 may include a processor 1020, a memory 1030, an input device 1050, a sound output device 1055, a display device 1060, an audio module 1070, a sensor module 1076, an interface 1077, a haptic module 1079, a camera module 1080, a power management module 1088, a battery 1089, a communication module 1090, a subscriber identification module (SIM) card 1096, or an antenna module 1097. In one embodiment, at least one (e.g., the display device 1060 or the camera module 1080) of the components may be omitted from the electronic device 1001, or one or more other components may be added to the electronic device 1001. Some of the components may be implemented as a single integrated circuit (IC). For example, the sensor module 1076 (e.g., a fingerprint sensor, an iris sensor, or an illuminance sensor) may be embedded in the display device 1060 (e.g., a display).

The processor 1020 may execute software (e.g., a program 1040) to control at least one other component (e.g., a hardware or a software component) of the electronic device 1001 coupled with the processor 1020 and may perform various data processing or computations.

As at least part of the data processing or computations, the processor 1020 may load a command or data received from another component (e.g., the sensor module 1076 or the communication module 1090) in volatile memory 1032, process the command or the data stored in the volatile memory 1032, and store resulting data in non-volatile memory 1034. The processor 1020 may include a main processor 1021 (e.g., a central processing unit (CPU) or an application processor (AP)), and an auxiliary processor 1023 (e.g., a graphics processing unit (GPU), an image signal processor (ISP), a sensor hub processor, or a communication processor (CP)) that is operable independently from, or in conjunction with, the main processor 1021. Additionally or alternatively, the auxiliary processor 1023 may be adapted to consume less power than the main processor 1021, or execute a particular function. The auxiliary processor 1023 may be implemented as being separate from, or a part of, the main processor 1021.

The auxiliary processor 1023 may control at least some of the functions or states related to at least one component (e.g., the display device 1060, the sensor module 1076, or the communication module 1090) among the components of the electronic device 1001, instead of the main processor 1021 while the main processor 1021 is in an inactive (e.g., sleep) state, or together with the main processor 1021 while the main processor 1021 is in an active state (e.g., executing an application). The auxiliary processor 1023 (e.g., an image signal processor or a communication processor) may be implemented as part of another component (e.g., the camera module 1080 or the communication module 1090) functionally related to the auxiliary processor 1023.

The memory 1030 may store various data used by at least one component (e.g., the processor 1020 or the sensor module 1076) of the electronic device 1001. The various data may include, for example, software (e.g., the program 1040) and input data or output data for a command related thereto. The memory 1030 may include the volatile memory 1032 or the non-volatile memory 1034. Non-volatile memory 1034 may include internal memory 1036 and/or external memory 1038.

The program 1040 may be stored in the memory 1030 as software, and may include, for example, an operating system (OS) 1042, middleware 1044, or an application 1046.

The input device 1050 may receive a command or data to be used by another component (e.g., the processor 1020) of the electronic device 1001, from the outside (e.g., a user) of the electronic device 1001. The input device 1050 may include, for example, a microphone, a mouse, or a keyboard.

The sound output device 1055 may output sound signals to the outside of the electronic device 1001. The sound output device 1055 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 1060 may visually provide information to the outside (e.g., a user) of the electronic device 1001. The display device 1060 may include, for example, a display, a hologram device, or a projector and control circuitry to control a corresponding one of the display, hologram device, and projector. The display device 1060 may include touch circuitry adapted to detect a touch, or sensor circuitry (e.g., a pressure sensor) adapted to measure the intensity of force incurred by the touch.

The audio module 1070 may convert a sound into an electrical signal and vice versa. The audio module 1070 may obtain the sound via the input device 1050 or output the sound via the sound output device 1055 or a headphone of an external electronic device 1002 directly (e.g., wired) or wirelessly coupled with the electronic device 1001.

The sensor module 1076 may detect an operational state (e.g., power or temperature) of the electronic device 1001 or an environmental state (e.g., a state of a user) external to the electronic device 1001, and then generate an electrical signal or data value corresponding to the detected state. The sensor module 1076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1077 may support one or more specified protocols to be used for the electronic device 1001 to be coupled with the external electronic device 1002 directly (e.g., wired) or wirelessly. The interface 1077 may include, for example, a high- definition multimedia interface (HDMI), a universal serial bus (USB) interface, a secure digital (SD) card interface, or an audio interface.

A connecting terminal 1078 may include a connector via which the electronic device 1001 may be physically connected with the external electronic device 1002. The connecting terminal 1078 may include, for example, an HDMI connector, a USB connector, an SD card connector, or an audio connector (e.g., a headphone connector).

The haptic module 1079 may convert an electrical signal into a mechanical stimulus (e.g., a vibration or a movement) or an electrical stimulus which may be recognized by a user via tactile sensation or kinesthetic sensation. The haptic module 1079 may include, for example, a motor, a piezoelectric element, or an electrical stimulator.

The camera module 1080 may capture a still image or moving images. The camera module 1080 may include one or more lenses, image sensors, image signal processors, or flashes. The power management module 1088 may manage power supplied to the electronic device 1001. The power management module 1088 may be implemented as at least part of, for example, a power management integrated circuit (PMIC).

The battery 1089 may supply power to at least one component of the electronic device 1001. The battery 1089 may include, for example, a primary cell which is not rechargeable, a secondary cell which is rechargeable, or a fuel cell.

The communication module 1090 may support establishing a direct (e.g., wired) communication channel or a wireless communication channel between the electronic device 1001 and the external electronic device (e.g., the electronic device 1002, the electronic device 1004, or the server 1008) and performing communication via the established communication channel. The communication module 1090 may include one or more communication processors that are operable independently from the processor 1020 (e.g., the AP) and supports a direct (e.g., wired) communication or a wireless communication. The communication module 1090 may include a wireless communication module 1092 (e.g., a cellular communication module, a short-range wireless communication module, or a global navigation satellite system (GNSS) communication module) or a wired communication module 1094 (e.g., a local area network (LAN) communication module or a power line communication (PLC) module). A corresponding one of these communication modules may communicate with the external electronic device via the first network 1098 (e.g., a short-range communication network, such as BLUETOOTH™, wireless-fidelity (Wi-Fi) direct, or a standard of the Infrared Data Association (IrDA)) or the second network 1099 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 1092 may identify and authenticate the electronic device 1001 in a communication network, such as the first network 1098 or the second network 1099, using subscriber information (e.g., international mobile subscriber identity (IMSI)) stored in the subscriber identification module 1096.

The antenna module 1097 may transmit or receive a signal or power to or from the outside (e.g., the external electronic device) of the electronic device 1001. The antenna module 1097 may include one or more antennas, and, therefrom, at least one antenna appropriate for a communication scheme used in the communication network, such as the first network 1098 or the second network 1099, may be selected, for example, by the communication module 1090 (e.g., the wireless communication module 1092). The signal or the power may then be transmitted or received between the communication module 1090 and the external electronic device via the selected at least one antenna.

Commands or data may be transmitted or received between the electronic device 1001 and the external electronic device 1004 via the server 1008 coupled with the second network 1099. Each of the electronic devices 1002 and 1004 may be a device of a same type as, or a different type, from the electronic device 1001. All or some of operations to be executed at the electronic device 1001 may be executed at one or more of the external electronic devices 1002, 1004, or 1008. For example, if the electronic device 1001 should perform a function or a service automatically, or in response to a request from a user or another device, the electronic device 1001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 1001. The electronic device 1001 may provide the outcome, with or without further processing of the outcome, as at least part of a reply to the request. To that end, a cloud computing, distributed computing, or client-server computing technology may be used, for example.

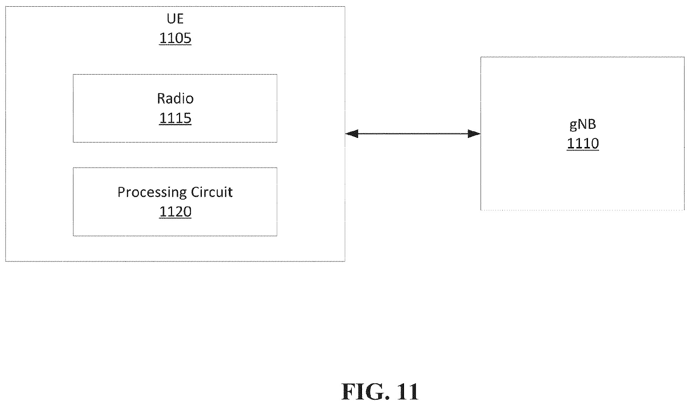

FIG. 11 shows a system including a UE 1105 and a gNB 1110, in communication with each other. The UE may include a radio 1115 and a processing circuit (or a means for processing) 1120, which may perform various methods disclosed herein, e.g., the method illustrated in FIG. 2. For example, the processing circuit 1120 may receive, via the radio 1115, transmissions from the network node (gNB) 1110, and the processing circuit 1120 may transmit, via the radio 1115, signals to the gNB 1110.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

**Claims**

1. A method performed by a terminal (1105) in a wireless communication system, the method comprising:

   receiving (801), from a base station (1110), control information preconfiguring the terminal (1105) with a set of channel state information reference signal, CSI-RS, resources, wherein each CSI-RS resource in the set of CSI-RS resources is uniquely mapped to a powerControlOffsetSS value;
   receiving (802) a set of CSI-RSs;
   performing (803) measurements of each of the CSI-RSs of the set of CSI-RSs; and
   transmitting (805) a CSI report including the measurements of each of the CSI-RSs of the set of CSI-RSs.

2. The method of claim 1, wherein the base station (1110) includes a first antenna port-to-transceiver unit, TxRU, and a second TxRU, and
   wherein the control information maps:

   a first CSI-RS to the first TxRU at full power and the second TxRU being off,
   a second CSI-RS to the first TxRU being off and the second TxRU at full power, and
   a third CSI-RS to the first TxRU and the second TxRU at a same power.

3. The method of claim 1 or 2, wherein the control information includes radio resource control, RRC, signaling.

4. The method of any one of claims 1 to 3, wherein the CSI report further includes at least one of an index of a transceiver pattern employed or an index of a powerControlOffsetSS value.

5. The method of any one of claims 1 to 4, wherein performing the measurements of each of the CSI-RSs of the set of CSI-RSs comprises:

   performing (803) blind decoding to identify a received CSI-RS based on the set of CSI-RS resources; and
   identifying (804) a powerControlOffsetSS value of the received CSI-RS, based on the control information.

6. A method performed by a base station (1110) in a wireless communication system, the method comprising:

   transmitting (901) control information preconfiguring a terminal (1105) with a set of channel state information reference signal, CSI-RS, resources, wherein each CSI-RS resource in the set of CSI-RS resources is uniquely mapped to a powerControlOffsetSS value;
   transmitting (902) a set of CSI-RSs; and
   receiving (903), from the terminal (1105), a CSI report including measurements of each of the CSI-RSs of the set of CSI-RSs,
   wherein the terminal (1105) performs the measurements of each of the CSI-RSs of the set of CSI-RSs.

7. The method of claim 6, wherein the base station (1110) includes a first antenna port-to-transceiver unit, TxRU, and a second TxRU, and
   wherein the control information maps:

   a first CSI-RS to the first TxRU at full power and the second TxRU being off,
   a second CSI-RS to the first TxRU being off and the second TxRU at full power, and
   a third CSI-RS to the first TxRU and the second TxRU at a same power.

8. The method of claim 6 or 7, wherein the control information includes radio resource control, RRC, signaling.

9. The method of any one of claims 6 to 8, wherein the CSI report includes at least one of an index of a transceiver pattern employed or an index of the powerControlOffsetSS value.

10. The method of any one of claims 6 to 9, wherein the terminal (1105) performs the measurements of each of the CSI-RSs of the set of CSI-RSs by performing blind decoding (803) to identify a received CSI-RS based on the set of CSI-RS resources, and identifying (804) a powerControlOffsetSS value of the received CSI-RS, based on the control information.

11. A terminal (1105) for use in a wireless communication system, the terminal (1105) comprising:

   a transceiver; and
   a processor configured to:

   receive (801), from a base station (1110), control information preconfiguring the terminal (1105) with a set of channel state information reference signal, CSI-RS, resources, wherein each CSI-RS resource in the set of CSI-RS resources is uniquely mapped to a powerControlOffsetSS value,
   receive (802) a set of CSI-RSs,
   perform (803) measurements of each of the CSI-RSs of the set of CSI-RSs, and
   transmit (805) a CSI report including the measurements of each of the CSI-RSs of the set of CSI-RSs.

12. The terminal (1105) of claim 11, wherein the base station (1110) includes a first antenna port-to-transceiver unit, TxRU, and a second TxRU, and
   wherein the control information maps:

   a first CSI-RS to the first TxRU at full power and the second TxRU being off,
   a second CSI-RS to the first TxRU being off and the second TxRU at full power, and
   a third CSI-RS to the first TxRU and the second TxRU at a same power.

13. The terminal (1105) of claim 11 or 12, wherein the control information includes radio resource control, RRC, signaling.

14. The terminal (1105) of any one of claims 11 to 13, wherein the CSI report includes at least one of an index of a transceiver pattern employed or an index of the powerControlOffsetSS value.

15. The terminal (1105) of any one of claims 11 to 14, wherein the processor is further configured to perform the measurements of each of the CSI-RSs of the set of CSI-RSs by performing (803) blind decoding to identify a received CSI-RS based on the set of CSI-RS resources, and identifying (804) a powerControlOffsetSS value of the received CSI-RS, based on the control information.

16. A base station (1110) for use in a wireless communication system, the base station (1110) comprising:

   a transceiver; and
   a processor configured to:

   transmit (901) control information preconfiguring a terminal (1105) with a set of channel state information reference signal, CSI-RS, resources, wherein each CSI-RS resource in the set of CSI-RS resources is uniquely mapped to a powerControlOffsetSS value,
   transmit (902) a set of CSI-RSs, and
   receive (903), from the terminal (1105), a CSI report including measurements of each of the CSI-RSs of the set of CSI-RSs,

   wherein the terminal (1105) performs the measurements of each of the CSI-RSs of the set of CSI-RSs.

17. The base station (1110) of claim 16, further comprising a first antenna port-to-transceiver unit, TxRU, and a second TxRU, and
   wherein the control information maps:

   a first CSI-RS to the first TxRU at full power and the second TxRU being off,
   a second CSI-RS to the first TxRU being off and the second TxRU at full power, and
   a third CSI-RS to the first TxRU and the second TxRU at a same power.

18. The base station (1110) of claim 16 or 17, wherein the control information includes radio resource control, RRC, signaling.

19. The base station (1110) of any one of claims 16 to 18, wherein the CSI report includes at least one of an index of a transceiver pattern employed or an index of the powerControlOffsetSS value.

20. The method of any one of claims 16 to 19, wherein the terminal (1105) performs the measurements of each of the CSI-RSs of the set of CSI-RSs by performing blind decoding (803) to identify a received CSI-RS based on the set of CSI-RS resources, and identifying (804) a powerControlOffsetSS value of the received CSI-RS, based on the control information.

FIG. 1

FIG. 2

FIG. 3

| | | | | |
|---|---|---|---|---|
| A/D | Serving Cell ID | | BWP ID | Oct 1 |
| R | IM | SP CSI-RS resource set ID | | Oct 2 |
| R | R | SP CSI-IM resource set ID | | Oct 3 |
| R | TCI State $ID_0$ | | | Oct 4 |

...

| | | |
|---|---|---|
| R | TCI State $ID_N$ | Oct N+4 |

FIG. 4

EP 4 415 289 A1

gNB

UE

RRC Config

501

CSI Report: CRI_2+RSRP

502

PDSCH+MAC CE – TCI State Activation for PDCCH

503

Tx Power/9 Antenna Port Indication of QCL Source

504

PDCCH-DCI 1_1 – TCI State Activation for PDSCH

505

Tx Power/9 Antenna Port Indication of QCL Source

506

PDSCH

507

FIG. 5

FIG. 6

FIG. 7

```
┌─────────────────────┐
│  RECEIVE CONTROL    │──── 801
│  INFORMATION        │
└─────────────────────┘
          │
          ▼
┌─────────────────────┐
│  RECEIVE CSI-RS     │──── 802
│                     │
└─────────────────────┘
          │
          ▼
┌─────────────────────┐
│  PERFORM BLIND      │──── 803
│  DECODING           │
└─────────────────────┘
          │
          ▼
┌─────────────────────┐
│  IDENTIFY           │──── 804
│  powerCONTROLOffsetSS│
│  VALUE              │
└─────────────────────┘
          │
          ▼
┌─────────────────────┐
│  TRANSMIT CSI REPORT│──── 805
│                     │
└─────────────────────┘
```

FIG. 8

FIG. 9

**1000**

**FIG. 10**

EP 4 415 289 A1

**FIG. 11**

Europäisches
Patentamt

European
Patent Office

Office européen
des brevets

# EUROPEAN SEARCH REPORT

**Application Number**

EP 24 15 5914

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MODERATOR (INTEL CORPORATION): "Discussion Summary #2 for energy saving techniques of NW energy saving SI", 3GPP DRAFT; R1-2208185, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Toulouse, France; 20220822 - 20220826 28 August 2022 (2022-08-28), XP052276107, Retrieved from the Internet: URL:https://ftp.3gpp.org/tsg_ran/WG1_RL1/TSGR1_110/Docs/R1-2208185.zip R1-2208185 FL summary_110-NW_Energy_NR-02_v047_moderator.docx [retrieved on 2022-08-28] * pages 78-79 * * pages 89-91,93 * | 1-20 | INV. H04L1/00 H04B17/24 H04B7/06 H04W52/16 H04W52/32 H04W52/42 H04W52/14 |
| X | YOUNGBUM KIM ET AL: "Network energy saving techniques", 3GPP DRAFT; R1-2212057; TYPE DISCUSSION; FS_NETW_ENERGY_NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 1, no. Toulouse, FR; 20221114 - 20221118 7 November 2022 (2022-11-07), XP052222622, Retrieved from the Internet: URL:https://www.3gpp.org/ftp/TSG_RAN/WG1_RL1/TSGR1_111/Docs/R1-2212057.zip R1-2212057.docx [retrieved on 2022-11-07] * pages 10,12-14 * | 1-20 | **TECHNICAL FIELDS SEARCHED (IPC)** H04L H04B H04W |

The present search report has been drawn up for all claims

| Place of search | Date of completion of the search | Examiner |
|---|---|---|
| The Hague | 27 June 2024 | Yang, Betty |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

........................................................................................
& : member of the same patent family, corresponding
   document

EPO FORM 1503 03.82 (P04C01)